Europäisches Patentamt

European Patent Office

Office européen des brevets

(11) Publication number: **0 140 023**
**B1**

(12) **EUROPEAN PATENT SPECIFICATION**

(45) Date of publication of patent specification: **17.11.88**

(21) Application number: **84110361.7**

(22) Date of filing: **31.08.84**

(51) Int. Cl.⁴: **G 21 C 21/00,** F 27 D 3/00,
B 65 G 47/80

(54) Nuclear fuel pellet sintering boat loading system.

(30) Priority: **28.09.83 US 536934**

(43) Date of publication of application:
**08.05.85 Bulletin 85/19**

(45) Publication of the grant of the patent:
**17.11.88 Bulletin 88/46**

(84) Designated Contracting States:
**BE DE FR GB IT SE**

(56) References cited:
**US-A-3 027 020**
**US-A-4 332 120**

(73) Proprietor: **WESTINGHOUSE ELECTRIC CORPORATION**
**Westinghouse Building Gateway Center**
**Pittsburgh Pennsylvania 15222 (US)**

(72) Inventor: **Raymond, Theodore E.**
**Star Route Box 132A**
**Swansea South Carolina (US)**
Inventor: **Huggins, Thomas B.**
**239 Barmount Drive**
**Columbia South Carolina (US)**
Inventor: **Vining, George E.**
**255 Vining Lane**
**West Columbia South Carolina (US)**

(74) Representative: **Patentanwälte Dipl.-Ing. R. Holzer Dipl.-Ing. (FH) W. Gallo**
**Philippine-Welser-Strasse 14**
**D-8900 Augsburg (DE)**

Courier Press, Leamington Spa, England.

## Description

The present invention relates generally to handling nuclear fuel pellets and, more particularly, to a system for loading newly-made (green) nuclear fuel pellets into sintering boats from a pellet press.

An operational step in the nuclear fuel fabrication process is the loading of green nuclear fuel pellets, which have been ejected from the pellet press, into sintering containers, "boats", in preparation for high-temperature firing of the pellets in a sintering furnace. This operation requires careful handling of the pellets, because the pellets at this time are fragile and susceptible to damage.

It is known in the prior art to load nuclear fuel pellets into a sintering boat by a gravity discharge from the pellet press down a chute into the boat. This method has the disadvantage of allowing pellet to pellet impact and has considerable potential for pellet damage. In addition, random orientation of the pellets in each sintering boat reduces the loading density and therefore reduces the high-temperature firing production capacity.

A mechanized boat loader also is known, in the prior art, which includes a pick and place mechanism with mechanical blades or jaws to pick up a single row of nuclear fuel pellets at a time and to transfer that row into the sintering boat. It further is known to utilize a boat loader with a vacuum transfer head which lowers onto an array of nuclear fuel pellets, applies a vacuum to lift the pellets, and transfers the array to load a complete layer of pellets into the sintering boat at one time. These two methods have the disadvantage of requiring frequent attention to maintain the pick and place mechanisms operational.

U.S. Patent 4,332,120 discloses apparatus for loading nuclear fuel pellets, via gravity, into a container supported by a platform which lowers under increasing pellet weight thereon.

U.S. Patent 3,027,020 discloses a rotating drum with longitudinally aligned circumferential channels to load rows of cans onto a conveyor.

It is the principal object of the invention to provide a relatively maintenance-free sintering-boat loading system which achieves high loading density without nuclear fuel pellet damage.

The invention accordingly resides in a system for loading nuclear-fuel pellets from a pellet press into sintering boats, comprising a rotatable drum supported for rotation about a substantially horizontal axis and including at least one channel for holding a row of said pellets, said channel extending axially of the drum from one end thereof, being open toward the outer periphery of the drum, and having an open end at said one end of the drum; means for rotating said drum so as to move the channel successively from a pellet-receiving position to a pellet-discharging position and again to said pellet-receiving position; pellet transferring means for receiving pellets from said pellet press and for inserting a row of the received pellets into said channel from the open end thereof when the channel is in the pellet-receiving position; means for supporting a sintering boat in a loading position; pellet-row transferring means for receiving the row of pellets from the channel after movement thereof to the pellet-discharging position, and for transferring the received row of pellets into the sintering boat supported in said loading position; and means operative after each transfer of a row of pellets into the sintering boat for changing the relative position between the sintering boat and the pellet-row transferring means in a manner causing successive rows of pellets transferred into the sintering boat to be stacked therein in a predetermined order.

A preferred embodiment of the invention will now be described, by way of example only, with reference to the accompanying drawings, in which:

Figure 1 is a schematic planar view of a nuclear fuel pellet sintering boat loading system embodying the invention;

Figure 2 is an enlarged planar view of the rotating drum area shown in Figure 1;

Figure 3 is an enlarged side elevational view of the rotating drum area shown in Figure 1; and

Figure 4 is a schematic side elevational view of the rotating drum and sintering boat area shown in Figure 1.

In the drawings, like reference characters designate like or corresponding parts. Newly made nuclear fuel pellets 10 are formed by a pellet press 12 which includes a first turntable 14 and a first stationary wiper arm 16 to eject the pellets 10 therefrom. The system loads the pellets 10 into a first sintering boat 18 and then loads other pellets 10 from the press 12 into a second sintering boat 20 while the full first sintering boat 18 is replaced with an empty boat. This permits continuous pellet loading operations.

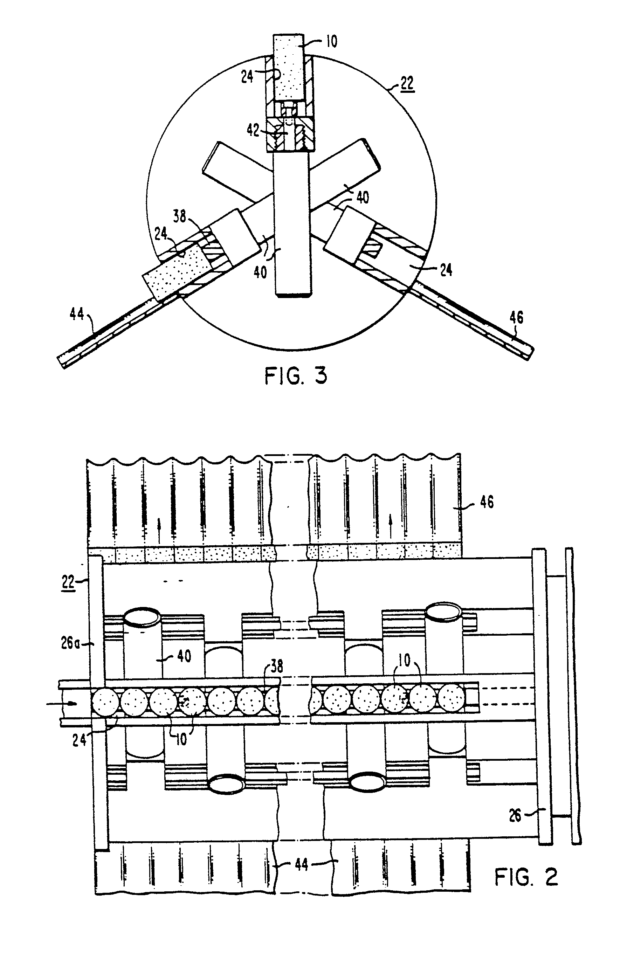

The loading system includes a generally horizontally disposed rotatable drum 22 which is provided with at least one channel 24 which extends axially of the drum between the opposite ends 26 of the drum, is open toward the outer periphery of the drum, has an open end at one end 26a (Fig. 2) of the drum 22, and is sized to hold a row of pellets 10. Preferably, the drum 22 has three such channels 24 spaced 120 degrees apart circumferentially about the drum 22.

The loading system includes means for rotating the drum 22 so as to move each channel 24 successively from a generally upward vertical position (pellet-receiving position) to a first generally below-horizontal position (pellet-discharging position) and around back to the upward vertical position. Preferably, the drum rotating means also includes means for counter-rotating the drum 22 so as to move the channel 24 from the upward vertical position the opposite direction sequentially to a second generally below-horizontal or pellet-discharging position, to the first below-horizontal position, and back to the upward vertical position. Preferably, the drum rotating and counter-rotating means include a motor 28 connected to the drum 22 by a shaft 30. Preferably, the first below-horizontal position is substantially 120 degrees from the upward vertical position in one rotational direction of the drum, and the second below-horizontal position is substantially 120 degrees from the upward vertical position in the opposite rotational direction of the drum.

The loading system also includes means for receiving the pellets 10 ejected from the pellet press 12, and for inserting the ejected pellets 10 into the respective channel 24 disposed at the time in the upward vertical position. Preferably, the pellet receiving and inserting means includes: a pellet transfer turntable 32 which receives pellets 10 ejected from the pellet press 12, a stationary transfer wiper arm 36 which guides pellets 10 off the transfer turntable 32, and a conveyor 34 for receiving the pellets 10 guided off the transfer turntable 32 by the transfer wiper arm 36, for carrying the pellets 10 to the drum 22, and for having the pellets in front be pushed into the aligned channel 24 by the pellets behind which are still on the moving conveyor 34. The pellet press 12 will eject the standard right circular cylindrically shaped pellets 10 such that they will be standing up. The conveyor 34 is so designed that any horizontally lying pellets, i.e., pellets which are not upright, will fall from the conveyor into a collector (not shown). This is accomplished by having the conveyor belt move over a camming surface (not shown) adapted to tilt the belt sufficiently to cause any toppled pellets to roll off. The preferred pellet receiving and inserting means described herein will maintain pellet orientation in that the pellets 10 will be inserted into the aligned channel 24 in an upright position. Other pellet receiving and inserting means include vibratory feeders, pick and place mechanisms and the like.

Preferably, means are additionally provided for pushing the row of pellets 10 held in each channel 24 radially outward therefrom when the channel 24 is disposed in either below-horizontal position. In the illustrated embodiment, such means comprise a radially movable bottom bar 38 (see Fig. 3) in each channel 24 supporting the entire row of pellets 10 therein, and a powered cylinder 40 (pneumatic, hydraulic, electric, or the like) operatively connected to the bottom bar 38 through a shaft 42. Alternatively, and as not shown herein, each channel 24 could have a stationary bottom member with a slit therein through which a first ejector bar could pass when the channel is in the first below-horizontal position, and through which a second ejector bar could pass when the channel is in the second below-horizontal position. Still another way of unloading pellets from the channels 24 in the drum 22 would be to provide for the pellets, e.g. by making the channel walls smooth enough, simply to slide out of the channels by gravity when the channels are in a below-horizontal, i.e., downwardly sloping, position, although positive pellets unloading from the channels by means of pusher mechanisms such as described above is preferred.

The first and preferably also the second below-horizontal position for the channels 24 has associated therewith an incline or slide 44 or 46, respectively, which at its upper end is disposed to receive the pellets discharged from the respective channel 24 and sliding onto the associated incline 44 or 46. Each of the inclines 44 and 46 preferably is tilted downward about 30 degrees from the horizontal, and each preferably is longitudinally grooved to guide the sliding pellets 10.

The system further includes means for positioning the first sintering boat 18 and the lower end of the first incline 44 relative to each other such that a row of pellets 10 having left a channel 24 and sliding down the first incline 44 will be smoothly deposited in the first sintering boat 18 where the next row of pellets 10 is to be stacked therein. Preferably, such means are provided also for similarly positioning the second sintering boat 20 relative to the lower end of the second incline 46. It is desirable that the positioning means support the respective sintering boats 18 and 20 such that their bottoms lie in planes generally perpendicular to the respective inclines 44 and 46 associated therewith. A recommended order of stacking the pellet rows in each sintering boat 18 or 20 would be to place the first row of pellets 10 in the lower corner, the second row on top of the first row along the lower side of the boat, the third row on top of the second, lower side, of the boat, the third row on top of the second row along the lower side, and so forth, until the entire lower side, or end wall, of the boat has received a complete layer of pellets. The pellet row to be stacked next would be placed near the lower corner upon the completed first layer of pellets, and the process would be repeated until the sintering boat is fully loaded with pellets. At any stage in the pellet loading operation, the position of the next-to-be-stacked pellet row is predetermined or preselected based on the particular pellet stacking order chosen.

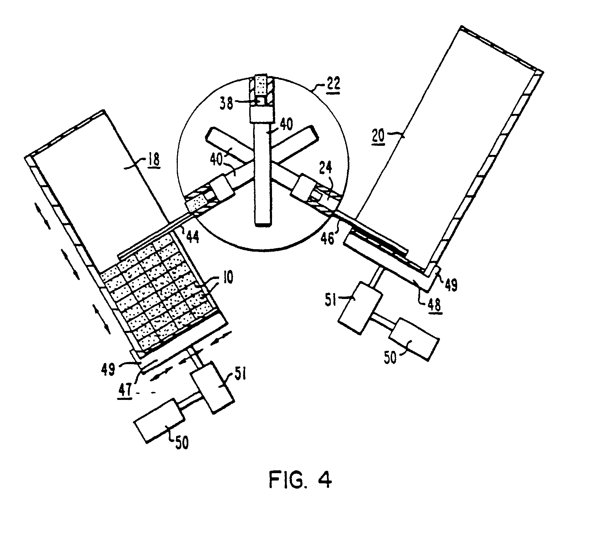

As seen best from Fig. 4, a preferred relative positioning means for each sintering boat 18 or 20 includes a standard two-directional sliding table 47 or 48 comprising a boat support 49, which sliding table is adapted to be indexed by substantially one pellet length in one direction and by substantially one pellet diameter in another direction perpendicular to the first one. The inclines 44 and 46 are stationary in this case. The positioning means includes further a first positioning powered cylinder 50 for moving the boat support 49 in said one direction, and a second positioning powered cylinder 51 for moving the boat support 49 in the other direction. Other suitable relative positioning means may include: a movable bottom member for each incline and a corresponding standard one-directional sliding table for moving the sintering boat perpendicular to the direction of movement of the incline's bottom member; a robot arm for positioning each sintering boat; and the like.

The sintering boat loading system further includes means for controlling the pellet receiving and inserting means, the drum rotating means, the relative positioning means, and the pellet pushing means. Preferably such means includes a microprocessor 52, or the like, h for coordinating the operation of the system components previously discussed herein.

Although the system could be operated to alternately load one row of pellets 10 at a time into each of the sintering boats 18 and 20 (in which case only 2 channels 24 would be needed), it is preferred that the microprocessor 52 be programmed so as to completely load one sintering boat before beginning to load the second sintering boat. As previously mentioned, this enables continuous pellet loading operation without shutting the system down for the purpose of changing sintering boats.

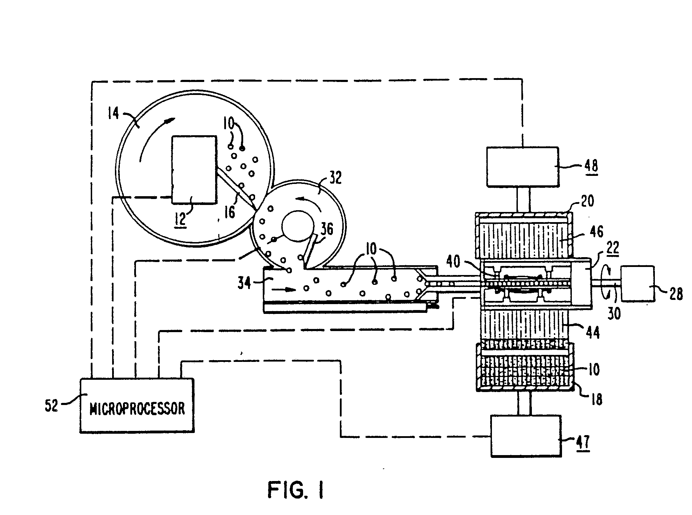

The sintering-boat loading system illustrated and described herein operates under the control of the microprocessor 52 in the following manner. At the beginning of a loading cycle, the drum 22 is positioned so as to have one of its channels 24 in the upper or pellet-receiving position. As green pellets 10 are supplied from the pellet press 12, and with the turntables 14 and 32 turning and the conveyor 34 moving, as indicated by arrows in Fig. 1, the pellets transferred from the turntable 14 onto the turntable 32 and thence onto the conveyor 34 are fed, in an upright position, into the appropriately positioned channel 24, preferably through a chute guiding the upright pellets single-file toward the aligned channel 24 of the drum, as seen from Fig. 1. When the channel 24 in the pellet-receiving position is thus filled with pellets to its desired capacity, suitable sensor means, such as a switch (not shown), respond to supply a signal causing the motor 28 to advance the drum 22 through 120° in one direction, say, counterclockwise as viewed in Figs. 3 and 4, thereby to move the full channel 24 to its pellet discharging position associated with the incline 44 while, at the same time, moving the next channel 24 to the upright pellet receiving position associated with the conveyor 34. Once the drum 22 is thus positioned, pellets 10 from the moving conveyor 34 are inserted into the channel 24 now in the receiving position, and the ejection bar 38 for the filled channel now in the discharging position is actuated to push the pellets from the associated channel and onto the incline 44, whereupon the row of pellets thus discharged will slide down the incline 44 and off it so as to be gently deposited in the sintering boat 18, namely, in the lower lefthand corner thereof (viewing Fig. 4) if this is the first row of pellets to be loaded into the boat 18. With the first row of pellets thus placed in the boat 18, the positioning means 47, 50, 51 associated with the latter will operate to index the sliding table 47 and, thus, the boat 18 to the next pellet-row receiving position and the motor 28 at the same time will advance the drum 22 counterclockwise another 120°, whereupon the above-described pellet-inserting step (as regards the channel 24 now in the receiving position) and pellet-discharging step (as regards the preceding channel 24 now in the discharging position) are repeated, to be immediately followed by a further operation of the positioning means indexing the sintering boat 18 to its next pellet-row receiving position. This sequence of steps is reiterated until the boat 18 is fully loaded, whereupon the direction of 120° incremental drum rotation is reversed to initiate another loading cycle, one just as the one described above but applied to loading the other sintering boat 20. While this new loading cycle is progressing, the fully loaded boat 18 can be removed from the sliding table 47 and replaced with an empty sintering boat, to be loaded during the next loading cycle commencing upon the next reversal of drum rotation which will occur when loading of the boat 20 is completed.

It will be appreciated that different sizes of pellets or sintering boats would require appropriately sized interchangeable (or adjustable) system components.

## Claims

1. A system for loading nuclear-fuel pellets (10) from a pellet press into sintering boats (18, 20), comprising a rotatable drum (22) supported for rotation about a substantially horizontal axis and including at least one channel (24) for holding a row of said pellets, said channel extending axially of the drum from one end thereof, being open toward the outer periphery of the drum, and having an open end at said one end of the drum; means (28, 30) for rotating said drum so as to move the channel successively from a pellet-receiving position to a pellet-discharging position and again to said pellet-receiving position; pellet transferring means (32, 34, 14) for receiving pellets from said pellet press and for inserting a row of the received pellets into said channel from the open end thereof when the channel is in the pellet-receiving position; means (47, 49) for supporting a sintering boat in a loading position; pellet-row transferring means (38, 44) for receiving the row of pellets from the channel after movement thereof to the pellet-discharging position, and for transferring the received row of pellets into the sintering boat supported in said loading position; and means (50, 51) operative after each transfer of a row of pellets into the sintering boat for changing the relative position between the sintering boat and the pellet-row transferring means in a manner causing successive rows of pellets transferred into the sintering boat to be stacked therein in a predetermined order.

2. A system according to claim 1, including additional means for supporting an additional sintering boat in a second loading position spaced from the first-mentioned loading position; means operative, upon completion of the loading of the first-mentioned sintering boat, for modifying the rotation of said drum such that rotation of the drum will move the channel from said pellet-receiving position next to a second pellet-discharging position spaced from the first-mentioned pellet-discharging position and associated with said second loading position; additional pellet-row transferring means for receiving the row of pellets from the channel after movement thereof to said second pellet-discharging position, and for transferring the received row of pellets into the sintering boat supported in said second loading position; and means operative after each transfer of a row of pellets into the sintering boat in said second loading position for changing the relative position between the sintering boat in the second loading position and said additional pellet-row transferring means in a manner causing successive rows of pellets transferred into the sintering boat in said second loading position to be stacked therein in a predetermined order.

3. A system according to claim 2, wherein the drum includes altogether three said channels spaced substantially 120° apart circumferentially about the drum, said pellet-receiving position, said first-mentioned pellet-discharging position, and said second pellet-discharging position being spaced from each other a distance corresponding to the spacing between the three channels.

4. A system according to claim 3, wherein the pellet-receiving position for each channel corresponds substantially to a 12 o'clock position in the rotation of the drum.

5. A system according to claim 2, 3 or 4, wherein said means for modifying the rotation of the drum modifies the drum rotation by reversing it.

6. A system according to any one of the preceding claims, wherein said or each pellet-row transferring means comprises an incline having its upper end disposed adjacent the periphery of the drum.

7. A system according to claim 6, wherein said incline is a slide having guiding grooves for the pellets formed therein.

8. A system according to claim 6 or 7, wherein said incline is tilted substantially 30° downward from a horizontal.

9. A system according to claim 6, 7 or 8, wherein said or each means for supporting a sintering boat is adapted to hold the latter with its bottom substantially perpendicular to the associated incline.

10. A system according to any one of the preceding claims, wherein said or each supporting means comprises a sintering-boat supporting table movable along two axes perpendicular with respect to each other. said or each adjusting means being operatively connected to the associated table for indexing the latter so as to effect stacking of successive rows of pellets in said predetermined order.

11. A system according to any one of the preceding claims, wherein said or each channel has a width substantially corresponding to the diameter of each pellet, said pellet transferring means including means for inserting the pellets into the channel in an upright position.

12. A system according to claim 11, wherein the pellet transferring means includes means for rejecting non-upright pellets.

13. A system according to any one of the preceding claims, wherein said drum includes means, effective when said or the respective channel is in said or either pellet-discharging position, for ejecting from the channel the row of pellets held therein.

14. A system according to claim 13, wherein the ejecting means comprises a movable bar disposed at the bottom of said or the respective channel, and means for actuating the movable bar toward the open side of the channel upon arrival of the latter in the pellet-discharging position.

15. A system according to claim 13 or 14, including control means for controlling and coordinating the operation of the drum rotating means, said pellet transferring means, the ejecting means associated with said or each channel, and the relative-position changing means associated with said or each loading position.

16. A system according to claim 15, wherein said control means comprises a microprocessor.

**Patentansprüche**

1. System zum Laden von Kernbrennstofftabletten (10) von einer Tablettenpresse auf Sinterschalen (18, 20), mit einer drehbaren Trommel (22), die um eine etwa horizontale Achse drehbar gelagert ist und mindestens eine Rinne (24) zur Aufnahme einer Tablettenreihe aufweist, wobei diese Rinne vom einen Trommelende aus axial entlang der Trommel verläuft, zum Außenumfang der Trommel hin offen ist und ein an dem genannten einen Trommelende offenes Ende aufweist, weiter mit Mitteln (28, 30) zum Drehen der Trommel derart, daß die Rinne fortschreitend aus einer Tablettenaufnahmeposition in eine Tablettenabgabeposition und wieder zurück in die Tablettenaufnahmeposition bewegt wird, Tablettenübergabemitteln (32, 34, 14) zur Aufnahme von Tabletten aus der Tablettenpresse und zum Einsetzen einer Reihe aufgenommener Tabletten in die genannte Rinne durch deren offenes Ende, während sich die Rinne in der Tablettenaufnahmeposition befindet, Mitteln (47, 49) zur Halterung einer Sinterschale in einer Beladeposition, Tablettenreihen-Übergabemitteln (38, 44) zur Aufnahme der Tablettenreihe aus der Rinne nach deren Bewegung in die Tablettenabgabeposition und zur Übergabe der aufgenommenen Tablettenreihe auf die in der Beladeposition gehaltene Sinterschale, und mit Mitteln (50, 51), die nach jeder Übergabe einer Tablettenreihe auf die Sinterschale zum Zwecke einer derartigen Veränderung der Relativposition zwischen der Sinterschale und den Tablettenreihen-Übergabemitteln betätigbar sind, daß aufeinanderfolgende, auf die Sinterschale übergebene Tablettenreihen dort in bestimmter Ordnung gestapelt werden.

2. System nach Anspruch 1, mit zusätzlichen Mitteln zum Halten einer zusätzlichen Sinterschale in einer zweiten Beladeposition, die mit Abstand von der erstgenannten Beladeposition liegt, weiter mit Mitteln, die, nach Beendigung der Beladung der erstgenannten Sinterschale, die Drehung der Trommel so steuern, daß die Trommeldrehung die Rinne von der Tablettenaufnahmeposition zunächst zu einer zweiten Tablettenabgabeposition bewegt, die mit Abstand von der erstgenannten Tablettenabgabeposition gelegen und der zweiten Beladeposition zugeordnet ist, mit zusätzlichen Tablettenreihen-Übergabemitteln zur Aufnahme der Tablettenreihe von der Rinne nach deren Bewegung zu der zweiten Tablettenabgabeposition und zur Übergabe der aufgenommenen Tablettenreihe in die in der zweiten Beladeposition gehalterte Sinterschale, und Mitteln, die nach jeder Übergabe einer Tablettenreihe auf die Sinterschale in der zweiten Beladeposition die Relativposition zwischen der Sinterschale in der zweiten Ladestellung und den zusätzlichen Tablettenreihen-Übergabemitteln in einer Weise verändern, daß aufeinanderfolgende, auf die Sinterschale in der zweiten Beladeposition übergebene Tablettenreihen darin in vorgegebener Weise gestapelt werden.

3. System nach Anspruch 2, wobei die Trommel insgesamt drei Rinnen aufweist, die mit Winkelabständen von jeweils etwa 120° am Trommelumfang gelegen sind, wobei die Tablettenaufnahmeposition, die erstgenannte Tablettenabgabeposition, und die zweite Tablettenabgabeposition dem Abstand zwischen den drei Rinnen entsprechende gegenseitige Abstände haben.

4. System nach Anspruch 3, wobei die Tablettenaufnahmeposition für jede Rinne etwa der 12-Uhr-Position im Zuge der Trommeldrehung entspricht.

5. System nach Anspruch 2, 3 oder 4, wobei die Mittel zur Steuerung der Trommeldrehung die Trommeldrehrichtung umkehren.

6. System nach einem der vorhergehenden Ansprüche, wobei die bzw. jede Tablettenreihen-Übergabemittel eine Schrägrampe aufweisen, deren oberes Ende dem Trommelumfang benachbart ist.

7. System nach Anspruch 6, wobei die Schrägrampe eine Rutsche mit darin gebildeten Führungsrillen für die Tabletten ist.

8. System nach Anspruch 6 oder 7, wobei die Schrägrampe um etwa 30° bezüglich der Horizontalen abwärts geneigt ist.

9. System nach Anspruch 6, 7 oder 8, wobei die bzw. jede Mittel zur Halterung einer Sinterschale so ausgelegt sind, daß sie die Sinterschale mit zur betreffenden Schrägrampe etwa lotrechter Bodenfläche halten.

10. System nach einem der vorhergehenden Ansprüche, wobei die bzw. jede Haltemittel einen Sinterschale-Haltetisch aufweisen, der entlang zweier zueinander senkrechter Achsen verschiebbar ist, wobei die bzw. jede Einstellmittel mit dem zugehörigen Tisch derart in Wirkungsverbindung stehen, daß sie den Tisch so indexieren, daß eine Stapelung aufeinanderfolgender Tablettenreihen in der genannten vorgegebenen Ordnung erfolgt.

11. System nach einem der vorhergehenden Ansprüche, wobei die bzw. jede Rinne eine etwa dem Tablettendurchmesser entsprechende Breite hat, und wobei die Tablettenübergabemittel Mittel zum Einsetzen der Tabletten in aufrechter Position in die Rinne aufweisen.

12. System nach Anspruch 11, wobei die Tablettenübergabemittel Mittel zum Zurückweisen nicht aufrechter Tabletten aufweisen.

13. System nach einem der vorhergehenden Ansprüche, wobei die Trommel Mittel aufweist, die, wenn die bzw. die betreffende Rinne sich in der bzw. einer Tablettenabgabeposition befindet, ein Ausstoßen der Tablettenreihe aus der Rinne bewirken.

14. System nach Anspruch 13, wobei die Ausstoßmittel eine am Boden der genannten bzw. der betreffenden Rinne angeordnete bewegliche Schiene und Mittel zur Betätigung der beweglichen Schiene zum offenen Ende der Rinne hin aufweisen, wenn die Rinne die Tablettenabgabeposition erreicht.

15. System nach Anspruch 13 oder 14, mit Steuermitteln zur Steuerung und Koordinierung der Tätigkeit der Mittel zur Trommeldrehung, der Tablettenübergabemittel, der bzw. jeder Rinne zugeordneten Ausstoßmittel, und der der bzw. jeder Beladeposition zugeordneten Relativpositionsänderungsmittel.

16. System nach Anspruch 15, wobei die genannten Steuermittel einen Mikroprozessor aufweist.

**Revendications**

1. Système pour charger des pastilles (10) de combustible nucléaire en provenance d'une presse à pastilles dans des nacelles (18, 20) de frittage, comprenant un tambour tournant (22) supporté pour sa rotation par un axe sensiblement horizontal, et comprenant au moins un canal (24) pour supporter une rangée desdites pastilles, ledit canal s'étendant axialement depuis une extrémité du tambour et étant ouvert en direction de la périphérie extérieure du tambour, et ayant une extrémité ouverte à ladite extrémité du tambour; des moyens (28, 30) pour faire tourner ledit tambour de façon à déplacer le canal successivement d'une position de réception des pastilles à une position de déchargement des pastilles, et à nouveau à ladite position de réception des pastilles; des moyens (32, 34, 14) de transfert des pastilles pour recevoir les pastilles de ladite presse à pastilles et pour introduire une rangée des pastilles reçues dans ledit canal par son extrémité ouverte quand le canal est dans la position de réception des pastilles; des moyens (47, 49) pour supporter une nacelle de frittage dans une position de chargement; des moyens (38, 44) de transfert des rangées de pastilles pour recevoir la rangée de pastilles en provenance du canal après le mouvement de ce dernier vers la position de déchargement des pastilles, et pour transférer la rangée reçue de pastilles dans la nacelle de frittage supportée dans ladite position de chargement; et des moyens (50, 51) fonctionnant après chaque transfert d'une rangée de pastilles dans la nacelle de frittage pour changer la position relative de la nacelle de frittage et des moyens de transfert des rangées de pastilles, de manière à empiler les rangées successives de pastilles transférées à l'intérieur de la nacelle dé frittage dans un ordre prédéterminé.

2. Système selon la revendication 1, comportant des moyens supplémentaires pour supporter une nacelle supplémentaire de frittage dans une seconde position de chargement espacée de la position de chargement mentionnée en premier; des moyens agissant lors de l'achèvement du chargement de la nacelle de frittage mentionnée en premier, de manière à modifier la rotation dudit tambour de telle sorte que la rotation du tambour déplace le canal de ladite position de réception des pastilles vers une seconde position voisine de déchargement des pastilles, espacée de la position de déchargement des pastilles mentionnée en premier et associée avec ladite seconde position de chargement; des moyens supplémentaires de transfert des rangées de pastilles pour recevoir la rangée de pastilles en provenance du canal après leur mouvement vers ladite seconde position de déchargement des pastilles, et pour transférer la rangée reçue de pastilles dans la nacelle de frittage supportée dans ladite seconde position de chargement; et des moyens agissant après chaque transfert d'une rangée de pastilles dans la nacelle de frittage dans ladite seconde position de chargement, de manière à changer la position relative de la nacelle de frittage dans la seconde position de chargement et desdits moyens supplémentaires de transfert des rangées de pastilles, de telle manière que les rangées successives de pastilles soient transférées dans la nacelle de frittage dans ladite seconde position de chargement pour y être entassées dans un ordre prédéterminé.

3. Système selon la revendication 2, dans lequel le tambour comporte en tout trois canaux décalés sensiblement de 120° sur la circonférence du tambour, ladite position de réception des pastilles, ladite position mentionnée en premier de déchargement des pastilles et ladite seconde position de déchargement des pastilles étant espacées les unes des autres d'une distance correspondant à l'espacement entre les trois canaux.

4. Système selon la revendication 3, dans lequel la position de réception des pastilles pour chaque canal correspond sensiblement à la position de 12 heures sur une horloge, dans la rotation du tambour.

5. Système selon l'une quelconque des revendications 2, 3 ou 4, dans lequel des moyens pour modifier la rotation du tambour modifient la rotation du tambour en l'inversant.

6. Système selon l'une quelconque des revendications précédentes, dans lequel chacun desdits moyens de transfert des rangées de pastilles comprend une rampe ayant son extrémité supérieure disposée de façon adjacente à la périphérie du tambour.

7. Système selon la revendication 6, dans lequel ladite rampe est une glissière ayant des rainures de guidage pour les pastilles formées dans ces dernières.

8. Système selon les revendications 6 ou 7, dans lequel ladite rampe est inclinée vers le bas suivant un angle sensiblement égal à 30° par rapport à l'horizontale.

9. Système selon l'une quelconque des revendications 6, 7 ou 8, dans lequel chacun desdits moyens pour supporter une nacelle de frittage est adapté pour maintenir cette dernière, son fond étant sensiblement perpendiculaire à la rampe associée.

10. Système selon l'une quelconque des revendications précédentes, dans lequel chacun desdits moyens de support comprend une table supportant une nacelle de frittage, et mobile le long de deux axes perpendiculaires l'un par rapport à l'autre, chacun desdits moyens d'ajustement étant connecté de façon opérationnelle à la table associée pour indexer cette dernière, afin d'effectuer l'empilage des rangées successives de pastilles dans un ordre prédéterminé.

11. Système selon l'une quelconque des revendications, dans lequel chacun desdits canaux a une largeur qui correspond sensiblement au diamètre de chaque pastille, les moyens de transfert des pastilles comprenant des moyens pour introduire les pastilles dans les canaux dans une position verticale.

12. Système selon la revendication 11, dans lequel les moyens de transfert des pastilles comprennent des moyens pour rejeter les pastilles non verticales.

13. Système selon l'une quelconque des revendications précédentes, dans lequel ledit tambour comporte des moyens qui sont actifs quand ledit canal respectif est dans ladite position de déchargement des pastilles, pour éjecter du canal la rangée de pastilles contenues dans ce dernier.

14. Système selon la revendication 13, dans lequel les moyens d'éjection comprennent une barre mobile disposée au fond dudit canal respectif, et des moyens pour actionner la barre mobile en direction du côté ouvert du canal lors de l'arrivée de ce dernier dans la position de déchargement des pastilles.

15. Système selon les revendications 13 ou 14, comprenant des moyens de commande pour commander et coordonner le fonctionnement des moyens pour faire tourner le tambour, lesdits moyens de transfert des pastilles, les moyens d'éjection associés à chacun desdits canaux, et les moyens pour changer les positions relatives associées à chacune desdites positions de chargement.

16. Système selon la revendication 15, dans lequel lesdits moyens de commande comportent un microprocesseur.

FIG. I

FIG. 3

FIG. 2

2

FIG. 4